# EUROPEAN PATENT APPLICATION

(11) **EP 4 653 830 A1**
(43) Date of publication of application: **26.11.2025**
(21) Application number: 25173330.9
(22) Date of filing: 29.04.2025
(51) Int. Cl.: G01K 1/024, G01K 13/00

(54) **REMOTE TEMPERATURE DIAGNOSTICS FOR MEDIUM-HIGH VOLTAGE EQUIPMENT IN AN ELECTRICAL SYSTEM**

(30) Priority: 02.05.2024 US 202418653414
(71) Applicant: ABB SCHWEIZ AG, 5400 Baden (CH)
(72) Inventor: KUKUCKA, Rick, 5400 Baden (CH); GIEGER, Jeffrey, 5400 Baden (CH)
(74) Representative: Zimmermann & Partner Patentanwälte mbB

(57) **Abstract**

A temperature sensor assembly for remotely diagnosing a temperature of a separable insulated connector in a medium-high voltage electrical distribution system is provided. The temperature sensor assembly includes a temperature sensor configured to couple with a test point of a separable insulated connector in an electrical distribution system and configured to detect a temperature of the separable insulated connector. The temperature sensor assembly further includes a communication circuitry electrically coupled with the temperature sensor and configured to transmit the detected temperature to a remote device.

## Description

### BACKGROUND

The field of the disclosure relates generally to electrical systems, and more particularly, to assemblies and methods for remote temperature diagnostics for equipment in an electrical system.

In a medium to high voltage electrical distribution system, a separable insulated connector is used to couple an electrical conductor with a piece of equipment, such as a transformer. The voltage across the separable insulated connector is 15 kV or higher and the current flowing through the separable insulated connector is 200 A or higher. At such a high voltage and current, overheating of the separable insulated connector may cause severe damage to the electrical system. Therefore, it is desirable to monitor the temperature of the separable insulated connector. Known methods and assemblies for temperature diagnostics are disadvantaged in some aspects and improvements are desired.

### BRIEF DESCRIPTION

In one aspect, a temperature sensor assembly for remotely diagnosing a temperature of a separable insulated connector in a medium-high voltage electrical distribution system is provided. The temperature sensor assembly includes a temperature sensor configured to couple with a test point of a separable insulated connector in an electrical distribution system and configured to detect a temperature of the separable insulated connector. The temperature sensor assembly further includes a communication circuitry electrically coupled with the temperature sensor and configured to transmit the detected temperature to a remote device.

In another aspect, a method of assembling a temperature sensor assembly for remotely diagnosing a temperature of a separable insulated connector in a medium-high voltage electrical distribution system is provided. The method includes forming a temperature sensor configured to couple with a test point of a separable insulated connector in an electrical distribution system and configured to detect a temperature of the separable insulated connector. The method also includes forming a communication circuitry configured to transmit the detected temperature to a remote device, and electrically coupling the temperature sensor with the communication circuitry.

### BRIEF DESCRIPTION OF DRAWINGS

These and other features, aspects, and advantages of the present disclosure will become better understood when the following detailed description is read with reference to the accompanying drawings in which like characters represent like parts throughout the drawings.
FIG. 1A is a block diagram of an example temperature sensor system.
FIG. 1B shows an example embodiment of the temperature sensor system shown in FIG. 1A.
FIG. 1C shows an example temperature sensor assembly of the temperature sensor system shown in FIG. 1B.
FIG. 2A shows an example separable insulated connector of the temperature sensor system shown in FIG. 1A.
FIG. 2B is an enlarged view of a portion in a cross-sectional view of the separable insulated connector shown in FIG. 2A along cross-sectional line 2B-2B as indicated in FIG. 2A, where a cap for a test point of the separable insulated connector is removed and a harvesting conductor is inserted in the test point.
FIG. 3 is a flow chart of an example method of assembling a temperature sensor assembly shown in FIGs. 1A-2B.

### DETAILED DESCRIPTION

The disclosure includes systems, assemblies, and methods for remotely diagnosing the temperature of separable insulated connectors in an electrical system. Electrical elbows are described herein as examples for illustration purposes only. The systems, assemblies, and methods described herein may be applied to separable insulated connectors in an electrical system in general. As used herein, separable insulated connectors refer to cable accessories, switchgear assemblies, cable splices, surge arrestors, electrical elbows including fused elbows and/or elbows for various current ratings, or any other connectors that insulate electrical conductors or electrically conducting components in an electrical distribution system. The electrical distribution system may be rated 2.5 kV through 38 kV. Method aspects will be in part apparent and in part explicitly discussed in the following description.

Electrical elbows are used to couple electrical conductors with equipment in an electrical system. An electrical elbow may fail and become overheated due to defects in crimping or poor workmanship in fabricating the electrical elbow. In known methods, to detect overheating of the electrical elbow, a lineman needs to physically visit the vault and/or the enclosure where the electrical elbow is housed. Before maintenance to be performed, to ensure the safety of the lineman, a temperature reading is conducted by direct contact with the separable insulated connector or using a line-of-sight device, such as an infra-red camera, where the device needs to be positioned in proximity with and a line of sight with the electrical elbow to measure the temperature of the electrical elbow before opening the enclosure that houses the electrical elbow. In a medium-high voltage electrical distribution system, the voltage is medium to high, e.g., between 2.5 kV and 38 kV, and the current flowing through the electrical elbow may be 200 A to 600 A. At such a high voltage and current, the known method poses significant safety risk to the lineman, because the temperature of the elbow may be dangerously high and a thermal runaway may be imminent.

In contrast, the systems, assemblies, and methods described herein facilitate remote diagnostics of the temperatures of the separable insulated connectors, thereby increasing the safety for the utility personnel and the safety of the electrical system. A lineman may access the temperature data via a remote device, saving physical trips for the lineman. The temperature sensor assemblies may be coupled with the separable insulated connectors at test points of the separable insulated connectors, thereby facilitating retrofitting the temperature sensor assemblies to the separable insulated connectors without changes to the separable insulated connectors or interference with the existing functionalities of the separable insulated connectors. The temperature data may be transmitted via Bluetooth Low Energy (BLE) signals, which consume relatively low energy and cover a relatively far distance, compared to standard Bluetooth^{®} technology.

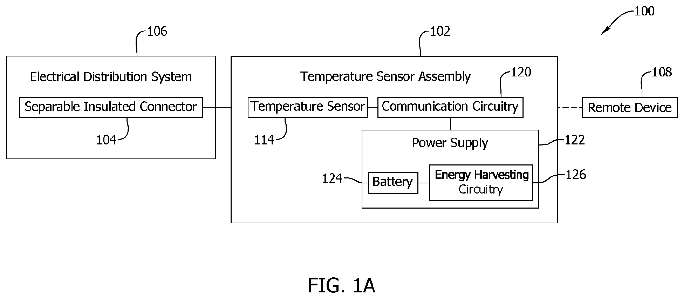

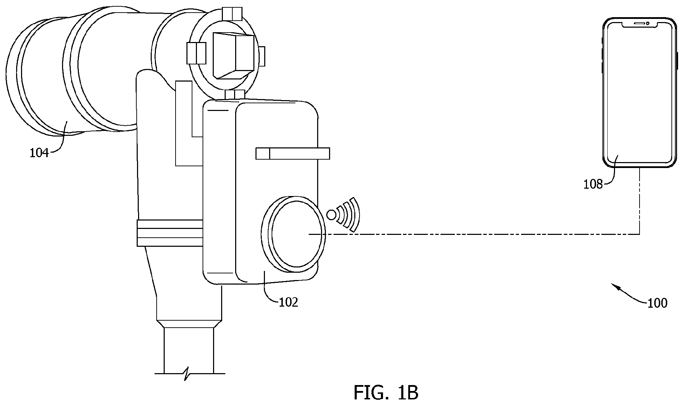

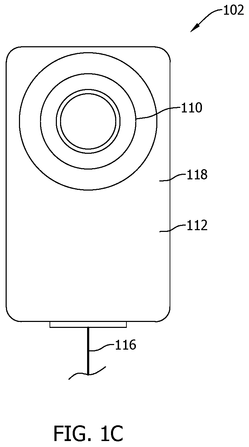

FIGs. 1A-1C show an example temperature sensor system 100. FIG. 1A is a block diagram of the temperature sensor system 100. FIG. 1B is a schematic diagram of the temperature sensor system 100. FIG. 1C shows an example temperature sensor assembly 102 of the temperature sensor system 100.

In the example embodiment, the temperature sensor system 100 includes the temperature sensor assembly 102. The temperature sensor assembly 102 is configured to detect temperature of a separable insulated connector 104 in an electrical distribution system 106. The electrical distribution system 106 may be an underground electrical distribution system. The electrical distribution system 106 includes components such as electrical conductors, separable insulated connectors, and transformers, and facilitate the delivery and distribution of electrical power to a destination. The temperature sensor system 100 may include a remote device 108. The remote device 108 may be a tablet or a cellular phone. The remote device 108 may be in direct communication with the temperature sensor assembly 102. In some embodiments, the remote device 108 is in communication with the temperature sensor assembly 102 through intermediate devices or systems. For example, the data from the temperature sensor assembly 102 may be sent to a system of a utility facility and the remote device 108 is in communication with the system. Communicating through a utility system may be advantageous in managing devices in the electrical distribution system by the utility facility. The remote device 108 may establish communication with the temperature sensor system 100 when needed, such as through an app on the remote device 108.

In operation, a lineman may remotely check the temperature of the separable insulated connector 104 via the remote device 108 before physically visiting the enclosure to check the temperature of the separable insulated connector 104. If the temperature is within a safe range, the lineman may proceed with work performed on the electrical distribution system 106. The temperatures on separable insulated connectors may be sent to a utility facility for managing the electrical system. For example, if the detected temperature of phase A is 50 °C, phase B as 50 °C, but phase C as 75 °C, the utility system may issue an alert and provide remedial measures, such as shutting the system and requesting maintenance and repair.

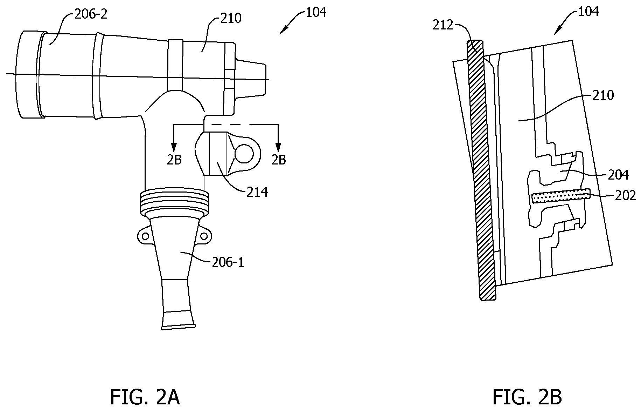

FIGs. 2A and 2B show an example separable insulated connector 104 with which the temperature sensor assembly 102 is configured to be coupled. FIG. 2A is a perspective view of the separable insulated connector 104. FIG. 2B is an enlarged view of a portion in a cross-sectional view of the separable insulated connector 104 along cross-sectional line 2B-2B as indicated in FIG. 2A, where a cap 214 of a test point 204 of the separable insulated connector 104 is removed and a harvesting conductor 202 is inserted into the test point 204.

In the depicted embodiment, the separable insulated connector is an electrical elbow. The separable insulated connector 104 may be other components in an electrical distribution system, such as electrical connectors or cable joints, that attach electrical cables with a piece of equipment or attach the electrical cables together. In some embodiments, the separable insulated connector 104 may be an existing separable insulated connector and the temperature sensor assembly 102 is retrofitted to the separable insulated connector 104.

The separable insulated connector 104 includes a first end 206-1 and a second end 206-2. The first end 206-1 is sized to receive an end of an electrical cable (not shown) therein. After being received in the separable insulated connector, the electrical cable establishes electrical connection with electrically conducting portions 212 of the separable insulated connector 104 inside the separable insulated connector 104. The second end 206 of the separable insulated connector is configured to be coupled with a piece of equipment in the electrical distribution system such as a transformer. When energized, electricity flowing from the electrical cable through the electrically conducting portions 212 of the separable insulated connector 104 and out to the piece of equipment.

In the example embodiment, the separable insulated connector 104 includes a receptacle housing 210. The receptacle housing 210 is fabricated from an insulating or electrically nonconductive material, such as plastic, to protect utility personnel from injuries resulting from contact with electrically conducting portions 212 of separable insulated connector 104 when the separable insulated connector 104 is energized.

In the example embodiment, the receptacle housing 210 includes the test point 204. The test point 204 has a relatively high impedance with the conducting portions 212 and is capacitively coupled to the conducting portions 212. The test point 204 enables a presence of electrical signals on the conducting portions 212 to be detected at the test point 204. For example, a hot stick voltage sensor (not shown) may be coupled with the test point 204 and detect the voltage across the conducting portions 212. A cap 214 may be placed at the entry of the test point 204 to restrict ingress of substance, such as dirt.

Referring back to FIGs. 1A-1C, in the depicted embodiment, the temperature sensor assembly 102 is formed as one single unit such that the temperature sensor assembly 102 may be coupled with the separable insulated connector 104 with one simple process. For example, the temperature sensor assembly 102 is coupled with the separable insulated connector 104 by coupling a mouth 110 of the temperature sensor assembly 102 with the test point 204 of the separable insulated connector 104.

In the example embodiment, the temperature sensor assembly 102 further includes an assembly housing 118. The assembly housing 118 includes a housing body 112 and a mouth 110 extending from the housing body 112. The mouth 110 may be at a non-zero angle with the housing body 112. The mouth 110 is configured to be coupled with the test point 204. For example, the mouth 110 may be coupled with the test point 204 by enclosing the exterior of the test point 204 such that the mouth 110 functions as a sleeve surrounding the test point 204. Alternatively, the mouth 110 may be coupled with the testing point by being inserted into the test point 204. The mouth 110 may couple with the test point 204 via friction.

In the example embodiment, the temperature sensor assembly 102 includes a temperature sensor 114 The temperature sensor 114 includes a probe 116. The probe 116 may be electrically conductive. The probe 116 may be a springloaded probe, such as a pogo pin, for improved contact with different sizes of separable insulated connectors 104 and improved handling of mechanical shock or vibration. Alternatively or additionally, the probe 116 is a wire. In the depicted embodiment, the probe 116 extends from an end of the assembly housing 118. The probe 116 may be positioned at any location on the assembly housing 118 to enable the temperature sensor assembly to function as described herein. For example, the probe 116 may be positioned proximate to the mouth 110, outside or inside the mouth 110, and establish contact or be in proximity with the receptacle housing when the mouth 110 is coupled with the test point 204. When the temperature sensor assembly 102 is coupled with the separable insulated connector 104, the probe 116 may be in direct contact with the receptacle housing 210. Alternatively, the probe 116 may be in proximity but not in contact with the receptacle housing 210 when the temperature sensor assembly 102 is coupled with the separable insulated connector 104. In some embodiments, the probe 116 may be inserted into the test point 204.

In the example embodiment, the temperature sensor 114 is configured to detect a temperature of the separable insulated connector 104 via the probe 116. The detected temperature is the temperature of a surface of the receptacle housing 210, such as an external surface of the receptacle housing. The temperature sensor 114 may be a solid state temperature sensor and configured to convert the temperature signals detected by the probe 116 into digital temperature data.

In the example embodiment, the temperature sensor assembly 102 further includes a communication circuitry 120 in communication with the temperature sensor 114. The communication circuitry 120 is configured to receive the temperature data from the temperature sensor 114 and transmit the temperature data to the remote device 108 directly and/or indirectly.

In the example embodiment, the communication circuitry 120 may be a wireless communication circuitry. The communication circuitry 120 may include a wireless communication transceiver. In some embodiments, the transceiver is a BLE transceiver. The temperature signals are transmitted using BLE signals. BLE signals are suitable for small data packs, such as temperature data. The BLE signals may be at a frequency of 2.4 GHz. The BLE technology consumes much less energy while transmitting signals at a much farther distance than the Bluetooth^{®} technology. The Bluetooth^{®} technology covers a distance up to 10 m. In contrast, the BLE technology may cover a distance up to 100 m. Further, because the BLE technology consumes much less energy, the temperature sensor assembly 102 requires a relatively low power source, such as a coin battery, and the battery may last relatively long, such as up to ten years.

In some embodiments, the communication circuitry 120 is a wired communication circuitry and includes a wired communication interface (not shown). The wired communication interface is sized to receive a wired communication cable, such as an Ethernet cable. The wired communication cable transmits the temperature data sent from the temperature sensor 114 to a computing device. The remote device 108 is in wireless communication with the computing device via wireless communication mechanisms, such as wi-fi or Internet, or wired communication mechanisms, such as Ethernet.

In the example embodiment, the temperature sensor assembly 102 further includes a power supply 122. The power supply 122 supplies electrical power to the communication circuitry 120. The power supply 122 may also supply power to a circuitry of the temperature sensor 114. The power supply 122 may be a battery 124. Alternatively or additionally, the power supply 122 is an energy harvesting circuitry 126 configured to harvest power from an electrically conducting portion of the separable insulated connector 104. The power harvested from the energy harvesting circuitry 126 may be sent to the communication circuitry 120 and/or the temperature sensor 114 and directly power the communication circuitry 120 and/or the temperature sensor 114, enabling a battery-less power supply 122. Alternatively or additionally, the harvested power may be at least partially sent to the battery 124 and to recharge the battery 124.

In some embodiments, the energy harvesting circuitry 126 may include a harvesting conductor 202 capacitively coupled with electrically conducting portions 212 of the separable insulated connector 104. The harvesting conductor 202 receive a voltage from electrically conducting portions 212 and supply power as the voltage to the communication circuitry 120 and/or the temperature sensor 114. In one example, the probe 116 for sensing the temperature of the receptacle housing 210 also serves as the harvesting conductor 202.

In some embodiments, the circuitry of the temperature sensor 114 and the circuitry of the communication circuitry 120 may be incorporated into one single circuit board. The circuit board may have dimensions of 6 mm x 6 mm. Alternatively, the temperature sensor 114 and the communication circuitry 120 are positioned on separate circuit boards. The circuit board or circuit boards are positioned inside the assembly housing 118.

In operation, temperature signals sensed by the temperature sensor 114 may be converted to digital temperature data. The digital temperature data are sent to the communication circuitry 120, and relayed by the communication circuitry 120 via wired and/or wireless communication mechanisms to the remote device 108.

In the example embodiment, the temperature sensor assembly 102 is removably coupled with the separable insulated connector 104. In some embodiments, the temperature sensor assembly 102 is fixed with the separable insulated connector.

The temperature sensor assembly 102 may be retrofitted onto an existing separable insulated connector 104. Alternatively, the temperature sensor assembly 102 may be assembled with the separable insulated connector 104.

Removably coupling the temperature sensor assembly 102 at the test point 204 is advantageous in retrofitting to an existing separable insulated connector 104 without modification to the separable insulated connector 104 or interference with existing functionalities of the separable insulated connector 104. For example, the temperature sensor assembly 102 is coupled with the separable insulated connector 104 at the test point 204. When the temperature is within a safe range, and the lineman needs to conduct measurements through the test point, the temperature sensor assembly 102 is removed from the separable insulated connector 104. Once the measurement is completed, the temperature sensor assembly 102 may be replaced with the test point 204, resuming the monitoring of the temperature of the separable insulated connector 104.

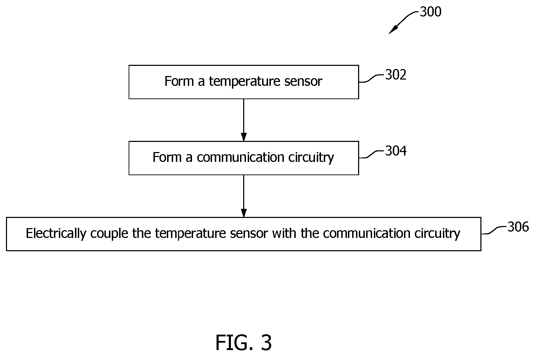

FIG. 3 is a flow chart of an example method 300 of assembling a temperature sensor assembly. In the example embodiment, the method 300 includes forming 302 a temperature sensor. Example temperature sensors are the temperature sensors 114 described herein. The method 300 further includes forming 304 a communication circuitry. Example communication circuitries are communication circuitries 120 described herein. The method 300 also includes electrically coupling 306 the temperature sensor with the communication circuitry.

At least one technical effect of the systems and methods described herein includes (a) remote temperature diagnostics of separable insulated connectors in an electrical system; (b) a temperature sensor assemble configured to transmit the temperature data via BLE signals; (c) a temperature sensor assembly removably couplable with a separable insulated connector at the test point of the separable insulated connector; and (d) a temperature sensor assembly powered by energy harvested from conducting portions of the separable insulated connector.

Example embodiments of systems, assemblies, and methods for remote temperature diagnostics are described above in detail. The systems and methods are not limited to the specific embodiments described herein but, rather, components of the systems and/or operations of the methods may be utilized independently and separately from other components and/or operations described herein. Further, the described components and/or operations may also be defined in, or used in combination with, other systems, methods, and/or devices, and are not limited to practice with only the systems described herein.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" and/or "substantially" as applied to a particular value of a range applies to both values, and unless otherwise dependent on the precision of the instrument measuring the value, may indicate +/- 10% of the stated value(s).

As used herein, an element or step recited in the singular and proceeded with the word "a" or "an" should be understood as not excluding plural elements or steps, unless such exclusion is explicitly recited. Furthermore, references to "example" or "one example" of the present disclosure are not intended to be interpreted as excluding the existence of additional examples that also incorporate the recited features. Further, to the extent that terms "includes," "including," "has," "contains," and variants thereof are used herein, such terms are intended to be inclusive in a manner similar to the term "comprises" as an open transition word without precluding any additional or other elements.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A temperature sensor assembly (102) for remotely diagnosing a temperature of a separable insulated connector in a medium-high voltage electrical distribution system, the temperature sensor assembly comprising:
a temperature sensor (114) configured to couple with a test point (204) of a separable insulated connector (104) in an electrical distribution system (106) and configured to detect a temperature of the separable insulated connector; and
a communication circuitry (120) electrically coupled with the temperature sensor and configured to:
transmit the detected temperature to a remote device (108).

2. The temperature sensor assembly of claim 1, wherein the communication circuitry comprises:
a Bluetooth low energy (BLE) transceiver configured to transmit data to the remote device via BLE signals.

3. The temperature sensor assembly of claim 1 or 2 further comprising:
an energy harvesting circuitry (126) configured to harvest power from the separable insulated connector and supply the harvested power to the communication circuitry.

4. The temperature sensor assembly of claim 3, wherein the energy harvesting circuitry comprises a harvesting conductor (202) capacitively coupled with an electrically conducting portion (212) of the separable insulated connector to harvest the power as a voltage from the electrically conducting portion.

5. The temperature sensor assembly of any one of claims 1 to 4, wherein the temperature sensor assembly is formed as one single unit.

6. The temperature sensor assembly of any one of claims 1 to 5, wherein the temperature sensor assembly is configured to removably couple with the separable insulated connector.

7. The temperature sensor assembly of any one of claims 1 to 6, wherein the communication circuitry comprises a wired communication interface sized to receive a wired communication cable.

8. The temperature sensor assembly of any one of claims 1 to 7 further comprising:
a battery (124) configured to supply power to the communication circuitry.

9. The temperature sensor assembly of any one of claims 1 to 8, wherein a circuitry of the temperature sensor and the communication circuitry are formed in one single integrated circuit board.

10. A method (300) of assembling a temperature sensor assembly (102) for remotely diagnosing a temperature of a separable insulated connector in a medium-high voltage electrical distribution system, the method comprising:
forming (302) a temperature sensor (114) configured to couple with a test point (204) of a separable insulated connector (104) in an electrical distribution system (106) and configured to detect a temperature of the separable insulated connector;
forming (304) a communication circuitry configured to transmit the detected temperature to a remote device (108); and
electrically coupling (306) the temperature sensor with the communication circuitry.

11. The method of claim 10, wherein forming the communication circuitry further comprises:
including a Bluetooth low energy (BLE) transceiver in the communication circuitry, the BLE transceiver configured to transmit data to the remote device via BLE signals.

12. The method of claim 10 or 11 further comprising:
forming an energy harvesting circuitry (126) configured to harvest power from the separable insulated connector and supply the harvested power to the communication circuitry.

13. The method of claim 12, wherein forming the energy harvesting circuitry further comprises:
capacitively coupling a harvesting conductor (202) of the energy harvesting circuitry with an electrically conducting portion (212) of the separable insulated connector to harvest the power as a voltage from the electrically conducting portion.

14. The method of any one of claims 10 to 13, further comprising:
forming the temperature sensor assembly as one single unit.

15. The method of any one of claims 10 to 14, further comprising:
configuring the temperature sensor assembly to be removably couplable with the separable insulated connector.
